(19) **Europäisches Patentamt**
**European Patent Office**
**Office européen des brevets**

(11) **EP 1 873 671 B2**

(12) **NEW EUROPEAN PATENT SPECIFICATION**
After opposition procedure

(45) Date of publication and mention
of the opposition decision:
**22.08.2018 Bulletin 2018/34**

(45) Mention of the grant of the patent:
**19.08.2009 Bulletin 2009/34**

(21) Application number: **06013441.8**

(22) Date of filing: **29.06.2006**

(51) Int Cl.:
**H04L 29/06** (2006.01)

(54) **A method for protecting IC Cards against power analysis attacks**

Verfahren zum Schutz von IC-Karten vor Leistungsanalyse-Attacken

Procédé de protection des cartes IC contre les attaques d'analyse de puissance

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.01.2008 Bulletin 2008/01**

(73) Proprietor: **STMicroelectronics International N.V.**
**Amsterdam (NL)**

(72) Inventors:
• **Fontana, Giovanni**
**80100 Napoli (IT)**

• **Donatiello, Saverio**
**83013 Mercogliano**
**Avellino (IT)**
• **Di Sirio, Giovanni**
**84100 Salerno (IT)**

(74) Representative: **Bosotti, Luciano et al**
**Buzzi, Notaro & Antonielli d'Oulx**
**Corso Vittorio Emanuele II, 6**
**10123 Torino (IT)**

(56) References cited:
**DE-A1- 19 936 939     FR-A1- 2 785 477**
**GB-A- 2 345 229**

## Description

Field of Application

The present invention relates to a method for protecting IC Cards against power analysis attacks comprising at least a first phase of executing a cryptographic operation for ciphering, through a secret key, the data in corresponding encipher data.

More particularly, the present invention relates to a method of the type described above wherein a time of execution of the at least first phase may be randomly delayed to de-correlate a successive execution of the first phase, respect to a power analysis attacks

Prior Art

As it is well known, cryptographic algorithms like DES, triple DES, AES, SHA, RSA, are used to cipher data in order to render it secure against possible attacks. For example, cryptographic algorithms are implemented in an IC Card to cipher data stored inside a memory unit of the IC Card it.

More particularly, the cryptographic algorithm is a mathematical transformation applying a secret key to one or more data input, in order to obtain one or more corresponding data output. Without the knowledge of such a secret key, the data output cannot be used to retrieve the data input wherefrom they derives.

More particularly, a cryptographic algorithm generally comprises a plurality of operations at least one of which, hereinafter also indicated as cryptographic operation, involving a secret key. The cryptographic algorithm and all the cryptographic operations are implemented in software or hardware intended to be run on a processor of the IC Card.

Generally, an attack is intended to discover the secret key stored inside the IC Card and consequently to discover sensible data stored inside it. The attack generally implements an analysis of the processor during its execution, discovering some implementation-specific characteristics of the cryptographic algorithm.

For example a power consumption of the processor, may be associated to an execution of cryptographic operations included in the cryptographic algorithm, being a cryptographic operation easily detectable because it generally involves computational intensive operations, corresponding to high power consumption for the processor.

More particularly, the analysis of the power consumption in an IC Card may provide information about the cryptographic operations, the processor clock ticks or informations about the terminal whereto such IC Card is connected, since the IC Card power is provided by the terminal itself.

More particularly, Differential Power Analysis (DPA) are based on a great number of subsequent executions of the same cryptographic algorithm, intended to analyse the processor power consumptions and to make a potential association between such a consumption and the secret key used by the cryptographic algorithm.

For example, two similar power consumptions detected in two different executions of the same cryptographic algorithm are probably related to the execution of the same or similar cryptographic operations, probably involving the same secret key.

Also Simple Power Analysis (SPA), based on simpler attacks that do not requir statistical analysis, may be used to detect secret keys.

Both Simple Power Analysis (SPA) and Differential Power Analysis (DPA) are applied without knowing the design of the IC Card object of analysis, they are non-invasive and easily-automated.

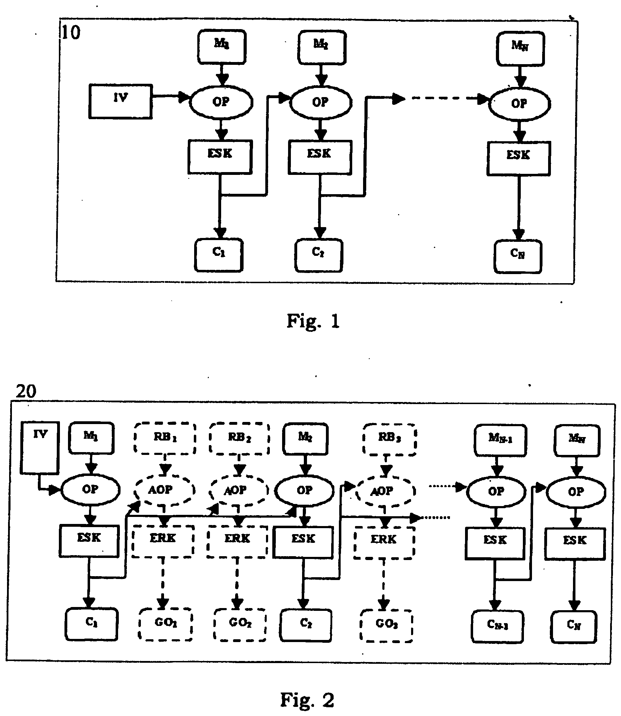

With reference to figure 1, a cryptographic algorithm for protecting data against possible attacks is schematically shown in a block diagram, globally indicated with numeral reference 10.

More particularly, the cryptographic algorithm comprises a sequence of cryptographic operations OP intended to cipher one or more plain texts M1,.., MN in corresponding enciphered texts C1,.., CN. As it is schematically shown, the sequence of cryptographic operations OP ciphers the plain texts M1,.., MN through a secret key ESK.

At the present, hardware and software countermeasures are known to reduce the leakage of information during possible attacks.

For example such countermeasures add noise to the power consumption measurements associated to the execution of cryptographic operations OP, involved in the use of the secret key ESK.

As instance, a randomising delay is inserted when a chryptographic operation OP is performed, in order to de-correlate subsequent executions of the cryptographic algorithm, being the execution time of such an algorithm and the execution time of the corresponding cryptographic operations non predictable. In this way subsequent executions of the same cryptographic algorithm requires different computational time.

These countermeasures render a signal amplitude measurement associated to the power consumption of the cryptographic operations OP useless to derive informations about the secret key ESK involved in the cryptographic algorithm.

Anyway, these countermeasures do not completely mislead an attack based on a power consumption from the delectability of the cryptographic algorithm, because the execution time of such cryptographic algorithm is abnormal during subsequent executions due to the introduction of the randomising delay.

For example, if the power consumption between two subsequent executions of the same cryptographic operation is different, an attack may detect an abnormal behaviour of such executions and associate the abnormal behaviour to a potential use of a secret key.

In this way, the attack concentrate the analysis near the abnormal executions, to recover the secret key ESK of the cryptographic algorithm and the sensible data. Prior art is disclosed in patent applications No. DE 199 36 939, No. FR 2 785 477 and No. GB 2 345 229 wherein methods for protecting data against software analysis using randomness are disclosed (dummy cryptographic operations, random parameters in the cryptographic rounds, dummy cryptographic S-Blocks). WO 03/039065 discloses a method wherein a predetermined number of operations with a false cryptographic key are executed.

The problem at the basis of the present invention is that of providing a method for preventing power analysis attacks on IC Cards not only able to dissociate a power consumption by cryptographic operations involved in a cryptographic algorithm but also able to mislead such attack through an introducing of additional cryptographic operations appositely intended to be analysed for sidetracking the attack.

Summary of the invention

The solution idea on which the present invention is based, is that of introducing a random number of additional cryptographic operations involving secret random parameters.

More particularly, the solution idea is based on a method for protecting data comprising a first phase, executing at least a cryptographic operation for ciphering data in corresponding encipher data, and at least a second phase, executing an additional cryptographic operation for ciphering additional data in corresponding encipher additional data, an execution of the first phase and the second phase being undistinguishable by the power analysis attacks.

This problem is solved, according to the present invention, by a method for protecting IC Cards against power analysis attacks as previously indicated and defined by the characterising portion of the enclosed claim 1.

Further characteristics and the advantages of the method according to the present invention will be apparent from the following description of an embodiment thereof, made with reference to the annexed drawings, given for indicative and non-limiting purpose.

Brief description of drawings

Figure 1: schematically shows in a block diagram a method for protecting data, comprising a sequence of operations intended to cipher plain texts in corresponding enciphered texts, according to the prior art.

Figure 2: schematically shows in a block diagram a method for protecting data, comprising a sequence of operations intended to cipher plain texts in corresponding enciphered texts, according to the present invention.

Figure 3: schematically shows in some steps of the method for protecting data, according to the present invention.

Detailed description

With reference to figure 2, a method for protecting data against power analysis attacks is schematically shown in a block diagram, globally indicated with numeral reference 20.

More particularly, the method comprises a sequence of cryptographic operations OP intended to cipher one or more plain texts M1,.., MN in corresponding enciphered texts C1,.., CN. As schematically shown, the sequence of cryptographic operations OP cipher the plain texts M1,.., MN through a secret key ESK.

The plain texts M1, MN are for example stored inside a memory unit of an IC Card with at least a secret key ESK for their encryption. The secret key ESK is unknown externally the IC Card and is object of external attacks. In fact, the plain texts M1,.., MN enciphered in enciphered texts C1,.., CN may be retrieved through the secret key ESK.

According to the present invention, the cryptographic operations OP intended to cipher one or more plain texts M1,.., MN in corresponding enciphered texts C1,.., CN are interleaved by additional cryptographic operations AOP.

More particularly, such additional cryptographic operations AOP comprise a plurality of secret parameters, random generated, for example one or more random plain texts RB.

One or more elaborations of the random plain texts RB is inserted inside the cryptographic algorithm, for example between one or more cryptographic operations intended to encipher one or more of said plain texts M1, .., MN.

The plurality of secret parameters also comprises a random secret keys ERK, random generated and used to encipher the one or more plain texts RB.

More particularly, a cryptographic operation OP intended to encipher a plain text M1, .., MN with the secret key ESK, is interleaved by an additional cryptographic operation AOP intended to encipher a random plain text RB with a random secret key ERK.

The additional cryptographic operation AOP on the random plain text RB has the same behavior of cryptographic operation OP on a plain text M, for example requiring a similar time of execution. The additional cryptographic operation AOP generates a garbage output that is not considered by the cryptographic algorithm for the effective ciphering of data.

In such a way, an attack is involved in an additional series of analysis intended to examine the power consumption of the additional cryptographic operations AOP, the medium time of succeeding in finding a secret key ESK being arbitrarily increased.

In fact, the attack analyze not only the cryptographic operations using the secret key ESK but also the cryptographic operations based on the random secret key ERK.

More particularly, the random plain texts RB may be inserted in scattered way inside the original plain text M.

Again with reference to figure 2, two subsequent additional cryptographic operations AOP are inserted between two cryptographic operations, being these last intended to cipher the plain texts M1 and M2 through the secret key ESK.

The plain texts M1 and M2 are ciphered in corresponding enciphered text C1 and C2 while a couple of random plain texts RB1 and RB2 are enciphered in corresponding garbage outputs GO through the additional cryptographic operations AOP.

The first additional cryptographic operation AOP encrypts the plain text RB1, randomly generated, through a secret key ERK, also randomly generated. The corresponding output is marked as garbage output GO since it does not correspond to a plain text M1, MN to cipher.

The second additional cryptographic operation AOP encrypts the plain text RB2, randomly generated, through the secret key ERK. Also in this case, the corresponding output is marked as a garbage output GO since it does not correspond to a plain text M1, MN and to a valid cryptographic operation.

All the cryptographic operations executed on these randomly generated plain texts RB do not influence the final output of the cryptographic algorithm.

More particularly, the outputs of these additional cryptographic operations AOP are stored in one or more garbage-areas, for example in a portion of the memory unit of the IC Card. These outputs are not considered in the successive additional cryptographic operations AOP.

Advantageously, the number and the disposition of additional cryptographic operations AOP between cryptographic operations may be not pre determined but randomly managed.

For example, depending on the use-requirements, a specific maximum number of additional cryptographic operations AOP is associated to the cryptographic algorithm.

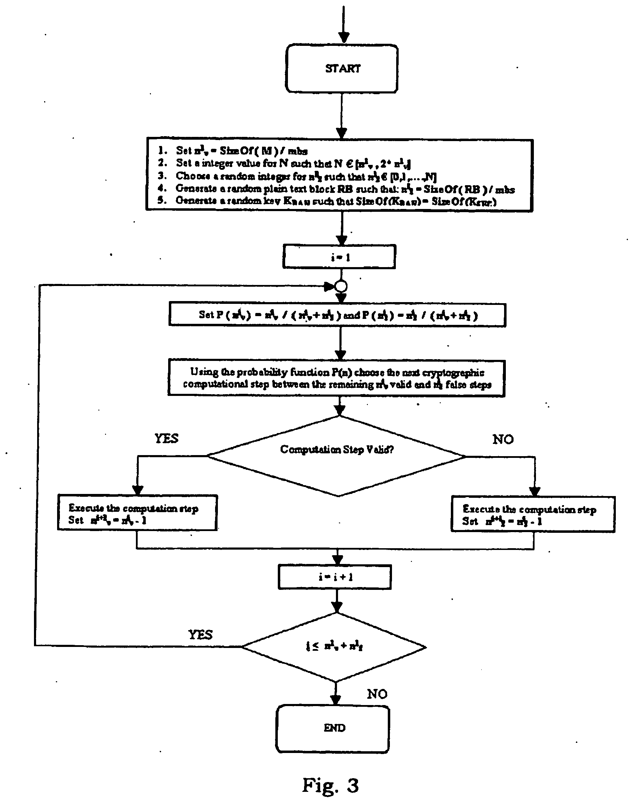

With reference to figure 3, a pseudo-code representing the method according to the present invention is shown, being the whole ciphering algorithm represented in a sequence of steps.

More particularly, a step of initialization provides to set:

$$n^1_v = SizeOf ( M ) / mbs$$

where $n^1_v$ is a number of remaining cryptographic operations at first iteration, M is a plain text and mbs is the minimum size in bytes of M. As instance, for DES, Triple DES, AES, mbs may be set to 8-bytes.

The step of initialization also provides to set $n^1_f$ as the number of remaining additional cryptographic operations AOP at first iteration.

For example $n^1_f$ is a random integer, chosen with uniform distribution in the interval 0, 1, 2,...., N. More particularly, the parameter N is fixed and chosen to balance the performance and the security of the cryptographic algorithm.

For example, N is in the interval $N \in [n^1_v, 2* n^1_v]$.

The initialization step also provides to generate a random plain text RB such that:

$$SizeOf ( RB ) = n^1_f * mbs$$

A random key $K_{RAN}$ is also generated during the initialization step, so that:

$$SizeOf (K_{RAN}) = SizeOf (K_{SEC})$$

A plurality of iteration follow the initialization step.

More particularly, the i-th iteration is such that

$$1 \leq i \leq n^1_v + n^1_f$$

and

$$P ( n^i_v ) = n^i_v / ( n^i_v + n^i_f ) \leq 1$$

where $P(n^i_v)$ is the probability to compute a cryptographic operation at iteration i-th.

Similarly,

$$P ( n^i_f ) = n^i_f / ( n^i_v + n^i_f ) \leq 1$$

where $P(n^i_f)$ is the probability to compute an additional cryptographic operation AOP at iteration i-th, being $P(n^i_v) + P(n^i_f) = 1$, because a probability function.

At the i-th iteration the next operation is chosen between the remaining $n^i_v$ cryptographic operation and the $n^i_f$ additional cryptographic operation AOP, using the probability functions defined above.

More particularly, if the next operation is a cryptographic operation, then it is executed using the corresponding valid parameters, the secret key ESK and the plain text M.

After the i-th step, $n^{i+1}_v$ is set so that

$$n^{i+1}_v = n^i_v - 1$$

and the successive step is executed.

On the contrary, if the next operation is an additional cryptographic operation AOP it is executed using the corresponding random parameters: for example the random plain text block $RB_i$ and the random secure key $K_{RAN}$ are used.

After the i-th step, $n^{i+1}{}_f$ is set so that

$$n^{i+1}{}_f = n^i{}_f - 1$$

and the successive step is executed.

Advantageously, the probability function P(n) defined at iteration i-th, is convergent.

In fact:

$$P(n^i{}_v) \leq 1, \ P(n^i{}_f) \leq 1$$

and

$$P(n^i{}_v) + P(n^i{}_f) = 1$$

for each i with $1 \leq i \leq n^1{}_v + n^1{}_f$

More particularly, for each i with $1 < i < n^1{}_v + n^1{}_f$

$$n^i{}_v + n^i{}_f < n^{i-1}{}_v + n^{i-1}{}_f$$

If, at iteration (i-1)-th, a cryptographic operation is chosen then:

$$n^i{}_v + n^i{}_f = (n^{i-1}{}_v - 1) + n^{i-1}{}_f$$

$$P(n^i{}_v) < P(n^{i-1}{}_v)$$

and

$$P(n^i{}_f) > P(n^{i-1}{}_f)$$

If, at iteration (i-1)-th, an additional cryptographic operation AOP is chosen then:

$$n^i{}_v + n^i{}_f = n^{i-1}{}_v + (n^{i-1}{}_f - 1)$$

$$P(n^i{}_v) > P(n^{i-1}{}_v)$$

and

$$P(n^i{}_f) < P(n^{i-1}{}_f)$$

At iteration $i = n^1{}_v + n^1{}_f$:

either

$$n^i{}_v = 1, \ n^i{}_f = 0$$

with $P(n^i{}_v) = 1$, $P(n^i{}_f) = 0$
or

$$n^i{}_v = 0, \ n^i{}_f = 1$$

with $P(n^i{}_v) = 0$, $P(n^i{}_f) = 1$

Advantageously, according to the method of the present invention, the overall processing time T is a random variable depending on how many additional cryptographic operation AOP are included in the whole ciphering algorithm. The computational time required by the single cryptographic operation T is a random variable with uniform distribution in the interval:

$$T \in [\ t * n^1{}_v, \ t * (n^1{}_v + n^1{}_f)\ ]$$

Advantageously, according to the method of the present invention, a power analysis attack on IC Cards is not only able to dissociate a power consumption by a corresponding cryptographic operation involved in a cryptographic algorithm but also to mislead such attack through an introducing of additional cryptographic operations AOP.

Such additional cryptographic operations AOP sidetrack the attack, accepting a little loss in terms of performance and providing a countermeasure that makes SPA-DPA and other time attacks more difficult to be implemented.

Advantageously, the order of cryptographic operations and additional cryptographic operations AOP is unpredictable and is balanced according to the required performance of the cryptographic algorithm.

**Claims**

1. Method for protecting data against power analysis attacks, comprising at least a first phase of executing a cryptographic operation (OP) for ciphering said data in corresponding encipher data through a secret key (ESK), comprising at least a second phase of executing an additional cryptographic operation (AOP) for ciphering additional data in corresponding encipher additional data through an additional secret key (ERK), said additional data and said additional secret key (ERK) being randomly generated so that an execution of said first phase and second phase is undistinguishable by said power analysis attacks, **characterized in that**

a sequence of said cryptographic operations (OP) are interleaved by said additional cryptographic operations;

the number and the disposition of said at least second phase of executing said additional cryptographic operations (AOP) between a couple of said at least first phase of executing said cryptographic operations (OP) are randomly managed;

the number and the disposition in the whole ciphering algorithm of said additional cryptographic operations (AOP) interleaving said sequence of said cryptographic operations (OP) are not predetermined but are randomly managed.

2. Method for protecting data according to claim 1 **characterized by** the fact that said additional data comprises one or more random plain texts (RB).

3. Method for protecting data according to claim 1 **characterized by** the fact that said additional cryptographic operation (AOP) enciphers said one or more random plain texts (RB) through said additional secret keys (ERK) in said corresponding encipher additional data.

4. Method for protecting data according to claim 1 **characterized by** the fact that said at least second phase of executing said additional cryptographic operation (AOP) generates a garbage output (GO) ignored by said first phase of executing said cryptographic operation (OP).

5. Method for protecting data according to claim 1 **characterized by** the fact of setting a maximum number of execution of said at least second phase.

6. Method for protecting data according to claim 1 **characterized by** the fact of storing said data in a memory unit of an IC card.

7. IC Card comprising a secret key (ESK) for protecting data against power analysis attacks by executing at least a cryptographic operation (OP) enciphering said data in corresponding encipher data, comprising means for generating additional data and additional secret keys (ERK) in order to execute an additional cryptographic operation (AOP) enciphering said additional data in corresponding encipher additional data, said cryptographic operation (OP) and said additional cryptographic operation (AOP) being undistinguishable by said power analysis attacks, **characterized in that** said means provides that

a sequence of said cryptographic operations (OP) are interleaved by said additional cryptographic operations;

the number and the disposition of said at least second phase of executing said additional cryptographic operations (AOP) between a couple of said at least first phase of executing said cryptographic operations (OP) are randomly managed;

the number and the disposition in the whole ciphering algorithm of said additional cryptographic operations (AOP) interleaving said sequence of said cryptographic operations (OP) are not predetermined but are randomly managed.

**Patentansprüche**

1. Verfahren zum Schutz von Daten vor Leistungsanalyse-Attacken, umfassend mindestens eine erste Phase des Ausführens einer kryptographischen Operation (OP) zum Verschlüsseln der Daten in entsprechende Verschlüsselungsdaten durch einen geheimen Schlüssel (ESK), umfassend mindestens eine zweite Phase des Ausführens einer zusätzlichen kryptographischen Operation (AOP) zum Verschlüsseln zusätzlicher Daten in entsprechende zusätzliche Verschlüsselungsdaten durch einen zusätzlichen geheimen Schlüssel (ERK), wobei die zusätzlichen Daten und der zusätzliche geheime Schlüssel (ERK) zufällig erzeugt werden, so dass eine Ausführung der ersten Phase und der zweiten Phase für die Leistungsanalyse-Attacke nicht unterscheidbar ist, **dadurch gekennzeichnet, dass**

eine Sequenz der kryptographischen Operationen (OP) durch die zusätzlichen kryptographischen Operationen verschachtelt wird;

die Anzahl und die Anordnung der mindestens zweiten Phase des Ausführens der zusätzlichen kryptographischen Operationen (AOP) zwischen einem Paar der mindestens ersten Phase des Ausführens der kryptografischen Operationen (OP) zufallsbedingt verwaltet werden;

die Anzahl und die Anordnung in dem gesamten Verschlüsselungsalgorithmus der zusätzlichen kryptographischen Operationen (AOP), die die Sequenz der kryptographischen Operationen (OP) verschachteln, nicht vorbestimmt sind sondern zufallsbedingt verwaltet werden.

2. Verfahren zum Schutz von Daten nach Anspruch 1, **gekennzeichnet durch** die Gegebenheit, dass die zusätzlichen Daten einen oder mehrere Zufallstexte (RB) umfassen.

3. Verfahren zum Schutz von Daten nach Anspruch 1, **dadurch gekennzeichnet, dass** die zusätzliche kryptographische Operation (AOP) den einen oder die mehreren zufälligen Klartexte (RB) durch die zusätzlichen geheimen Schlüssel (ERK) in die entsprechenden zusätzlichen Verschlüsselungsdaten verschlüsselt.

4. Verfahren zum Schutz von Daten nach Anspruch 1, **gekennzeichnet durch** die Gegebenheit, dass die mindestens zweite Phase des Ausführens der zusätzlichen kryptographischen Operation (AOP) eine Ausschussdaten-Ausgabe (GO) erzeugt, die durch die erste Phase des Ausführens der kryptografischen Operation (OP) ignoriert wird.

5. Verfahren zum Schutz von Daten nach Anspruch 1, **gekennzeichnet durch** die Gegebenheit des Festlegens einer maximalen Anzahl der Ausführung der mindestens zweiten Phase.

6. Verfahren zum Schutz von Daten nach Anspruch 1, **gekennzeichnet durch** die Gegebenheit des Speicherns der Daten in einer Speichereinheit einer IC-Karte.

7. IC-Karte, umfassend einen geheimen Schlüssel (ESK) zum Schutz von Daten vor Leistungsanalyse-Attacken durch Ausführen mindestens einer kryptografischen Operation (OP), die die Daten in entsprechenden Verschlüsselungsdaten verschlüsselt, umfassend Mittel zum Erzeugen zusätzlicher Daten und zusätzlicher geheimer Schlüssel (ERK), um eine zusätzliche kryptographische Operation (AOP) auszuführen, die die zusätzlichen Daten in entsprechende zusätzliche Verschlüsselungsdaten verschlüsselt, wobei die kryptographische Operation (OP) und die zusätzliche kryptographische Operation (AOP) für die Leistungsanalyse-Attacke nicht unterscheidbar sind, **dadurch gekennzeichnet, dass** die Mittel vorsehen, dass eine Sequenz der kryptographischen Operationen (OP) durch die zusätzlichen kryptographischen Operationen verschachtelt wird; die Anzahl und die Anordnung der mindestens zweiten Phase des Ausführens der zusätzlichen kryptographischen Operationen (AOP) zwischen einem Paar der mindestens ersten Phase des Ausführens der kryptografischen Operationen (OP) zufallsbedingt verwaltet werden; die Anzahl und die Anordnung in dem gesamten Verschlüsselungsalgorithmus der zusätzlichen kryptographischen Operationen (AOP), die die Sequenz der kryptographischen Operationen (OP) verschachteln, nicht vorbestimmt sind sondern zufallsbedingt verwaltet werden.

## Revendications

1. Méthode pour protéger des données contre des attaques par analyse de puissance, comprenant au moins une première phase d'exécution d'une opération cryptographique (OP) pour chiffrer lesdites données en des données chiffrées correspondantes par le biais d'une clé secrète (ESK), comprenant au moins une deuxième phase d'exécution d'une opération cryptographique supplémentaire (AOP) pour chiffrer des données supplémentaires en des données supplémentaires chiffrées correspondantes par le biais d'une clé secrète supplémentaire (ERK), lesdites données supplémentaires et ladite clé secrète supplémentaire (ERK) étant générées aléatoirement de manière qu'une exécution desdites première phase et deuxième phase soit indistinguable par lesdites attaques par analyse de puissance, **caractérisée en ce que**
une séquence desdites opérations cryptographiques (OP) est entrecoupée par lesdites opérations cryptographiques supplémentaires ;
le nombre et la disposition de ladite au moins une deuxième phase d'exécution desdites opérations cryptographiques supplémentaires (AOP) entre un couple de ladite au moins une première phase d'exécution desdites opérations cryptographiques (OP) sont gérés aléatoirement ;
le nombre et la disposition dans l'algorithme de chiffrement entier desdites opérations cryptographiques supplémentaires (AOP) entrecoupant ladite séquence desdites opérations cryptographiques (OP) ne sont pas prédéterminés mais sont gérés aléatoirement.

2. Méthode pour protéger des données selon la revendication 1, **caractérisée par le fait que** lesdites données supplémentaires comprennent un ou plusieurs textes en clair aléatoires (RB).

3. Méthode pour protéger des données selon la revendication 1, **caractérisée par le fait que** ladite opération cryptographique supplémentaire (AOP) chiffre lesdits un ou plusieurs textes en clair aléatoires (RB) par le biais desdites clés secrètes supplémentaires (ERK) en lesdites données supplémentaires chiffrées correspondantes.

4. Méthode pour protéger des données selon la revendication 1, **caractérisée par le fait que** ladite au moins une deuxième phase d'exécution de ladite opération cryptographique supplémentaire (AOP) génère une sortie de rebut (GO) ignorée par ladite première phase d'exécution de ladite opération cryptographique (OP).

5. Méthode pour protéger des données selon la revendication 1, **caractérisée par** le fait de régler un nombre maximal d'exécutions de ladite au moins une deuxième phase.

6. Méthode pour protéger des données selon la revendication 1, **caractérisée par** le fait de stocker lesdites données dans une unité de mémoire d'une carte à circuit intégré.

7. Carte à circuit intégré comprenant une clé secrète (ESK) pour protéger des données contre des attaques par analyse de puissance par exécution d'au moins une opération cryptographique (OP) chiffrant lesdites données en des données chiffrées correspondantes, comprenant un moyen pour générer des données supplémentaires et des clés secrètes supplémentaires (ERK) afin d'exécuter une opération cryptographique supplémentaire (AOP) chiffrant lesdites données supplémentaires en des données supplémentaires chiffrées correspondantes, ladite opération cryptographique (OP) et ladite opération cryptographique supplémentaire (AOP) étant indistinguables par lesdites attaques par analyse de puissance, **caractérisée en ce que** ledit moyen assure que

une séquence desdites opérations cryptographiques (OP) est entrecoupée par lesdites opérations cryptographiques supplémentaires ;

le nombre et la disposition de ladite au moins une deuxième phase d'exécution desdites opérations cryptographiques supplémentaires (AOP) entre un couple de ladite au moins une première phase d'exécution desdites opérations cryptographiques (OP) sont gérés aléatoirement ;

le nombre et la disposition dans l'algorithme de chiffrement entier desdites opérations cryptographiques supplémentaires (AOP) entrecoupant ladite séquence desdites opérations cryptographiques (OP) ne sont pas prédéterminés mais sont gérés aléatoirement.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19936939
- FR 2785477
- GB 2345229 A
- WO 03039065 A